# EUROPEAN PATENT APPLICATION

(11) **EP 2 526 817 A1**
(43) Date of publication of application: **28.11.2012**
(21) Application number: 11425138.2
(22) Date of filing: 24.05.2011
(51) Int. Cl.: A47B 13/02, F16B 12/44

(54) **A connection device for elements of metal bearing structures of office desktops and similar**

(71) Applicant: G.g.a. S.p.a., 62014 Corridonia (MC) (IT)
(72) Inventor: Walsh, John, Dublin 8 (IE)
(74) Representative: Baldi, Claudio

(57) **Abstract**

The present invention relates to a device for connection of beams (T) and legs (G) of metal bearing structures of desk tops and similar tops, which comprises an under-top bracket (1) with box-shaped structure, provided with two slots (3a) for insertion of the end sections of the beams (T), a symetrically arranged pair of slides (5) sliding inside said under-top bracket (1), a cursor (11) adapted to be situated and penetrate between said pair of slides (5), and a tightening bolt (12) to lock said cursor (11).

## Description

The present patent application for industrial invention relates to a device for easy and rapid connection of various elements of a metal bearing structure of tops of modern office desks and more generally work tops.

In order to better understand and appreciate the originality and advantages offered by the device of the invention, reference must be made to the configuration of a standard metal structure that is normally used today to support work tops of office desks.

Said bearing structure comprises a frame developed on a horizontal plane and formed of a parallel pair of longitudinal frame members and a parallel pair of transversal brackets in orthogonal position.

Said brackets, which are technically defined as "under-top" brackets, are respectively fixed at the opposite ends of said pair of longitudinal frame members, which are technically defined as "beams".

Said frame is raised from the ground by the legs of the bearing structure that, according to the specific case, may be provided with two legs only, being the so-called "T-shaped" legs, or with two pairs of legs, being the so-called "bridge" legs.

In case of two T-shaped lateral legs, the latter are composed of a foot with protruding stem, the top of which is fixed under each of said two under-top brackets, whereas in case of four legs, the two legs of each "bridge" pair are fixed at the two opposite ends and inside each of said two under-top brackets. From the above description it can be understood that multiple consecutive tightening operations are required for each under-top bracket in order to assemble a metal bearing structure of work tops or desk tops.

In case of two T-shaped lateral legs, the operator in charge of assembling the metal structure must carry out the following operations for each under-top bracket:
- two identical consecutive tightening operations to fix the two beams to the under-top bracket;
- one tightening operation to fix the top of the stem under the under-top bracket; In case of four "bridge" lateral legs, the operator in charge of assembling the metal structure must carry out the following operations for each under-top bracket:
- two identical consecutive tightening operations to fix the two beams to the under-top bracket;
- two identical consecutive tightening operations to fix the two legs of each "bridge" pair to the under-top bracket.

Each tightening operation normally involves screwing at least one, if not two bolts.

A critical examination of the aforesaid assembling and tightening technique of current metal bearing structures of desk tops and work tops in general has led to the idea of designing a new device that allows for reducing and simplifying the number of tightening operations, providing easy and rapid assembly and disassembly of said metal bearing structures.

The latter purpose has been achieved by the device of the invention, the main and secondary characteristics of which are illustrated in detail in the enclosed claims.

The device of the invention comprises:
- an under-top bracket with box-shaped structure, the longitudinal sides of which are provided with two slots to insert the end sections of the aforesaid pair of beams
- a specular divaricable pair of slides, horizontally and longitudinally sliding inside said under-top bracket with box-shaped structure
- a divaricator cursor adapted to be situated and penetrate between said pair of divaricable slides
- a tightening bolt to push said divaricator cursor forward and stabilize it in the position reached at the end of the forward travel.

Further to the forced divarication of said slides, the end sections of the beams are immobilized and engaged inside the under-top bracket.

Said one tightening bolt can be also used to fix the stem of a T-shaped leg, said stem being in perfect vertical alignment with said divaricator element.

In such a case it is simply necessary to provide the upper end of the stem of the leg with a threaded hole with vertical axis, where said one bolt is progressively screwed during the insertion travel of said divaricator cursor between said pair of divaricable slides.

Moreover, it must be noted that the bottom of said under-top bracket with box-shaped structure is provided with an opposite pair of openings for loose insertion of the upper ends of the two legs of each pair of "bridge" legs. Because of the presence of the two openings, each of said divaricable slides can be connected to a corresponding leg, with the advantage that the locking of the slides, at the end of the insertion travel of said divaricator cursor, determines not only the fixing of the beams to the under-top bracket, but also the simultaneous fixing of the two legs to the bracket.

For major clarity the description of the device of the invention continues with reference to the enclosed drawings, which are intended for purposes of illustration only and not in a limiting sense, wherein:
- Fig. 1 is an exploded axonometric view of the device of the invention;
- Figs. from 2 to 5 are a sequence of views showing the assembly operations of a metal bearing structure for desk tops with four legs, provided with the device of the invention;
- Fig. 6 is a view of a metal bearing structure for desk tops with two legs, after assembly, provided with the device of the invention;
- Fig. 7 is an axonometric view of one of said pair of divaricable slides. Referring to Fig. 1, the device (A) of the invention comprises a metal under-top bracket (1) with box-shaped structure, composed of a rectangular bottom (2), two longitudinal sides (3) and two transversal sides (4).

Each longitudinal side (3) is provided with a pair of identical slots (3a), whereas said bottom (2) is provided with an opposite pair of openings (2a).

Moreover, the device (A) of the invention comprises a specular divaricable pair of metal slides (5) that slide horizontally and longitudinally inside said under-top bracket (1).

Each slide (5) has a U-shaped cross-section so that each slide (5) equally comprises a rectangular bottom (6), two longitudinal sides (7), the top borders of which are joined with corresponding external shelves (7a), provided with holes and slots (7b) used as housings to fix the means adapted to tighten or directly support the desk or work top.

An opening (6a) is obtained on the bottom (6).

The end sections of the longitudinal sides (7) have an inclined profile (8) and are provided with steps (9 and 10).

The step (10) situated in proximity of the opening (6a) has a sloping profile. Finally, the device (A) of the invention comprises a divaricator cursor (11) with tightening bolt (12), provided with screwing handle (12a).

The bottom (2) is provided with a central hole (2b) adapted to be coupled with the bolt (12).

Said divaricator cursor (11) basically consists in a metal plate with an opposite pair of raised sloping edges (11a) adapted to be positioned between the specular pair of slides (5) and interfere with the inclined profile (8), in such a way that the downward travel of the cursor (11) - under the thrust of the bolt (12) being tightened - causes the progressive divarication of the slides (5) inside the bracket (1).

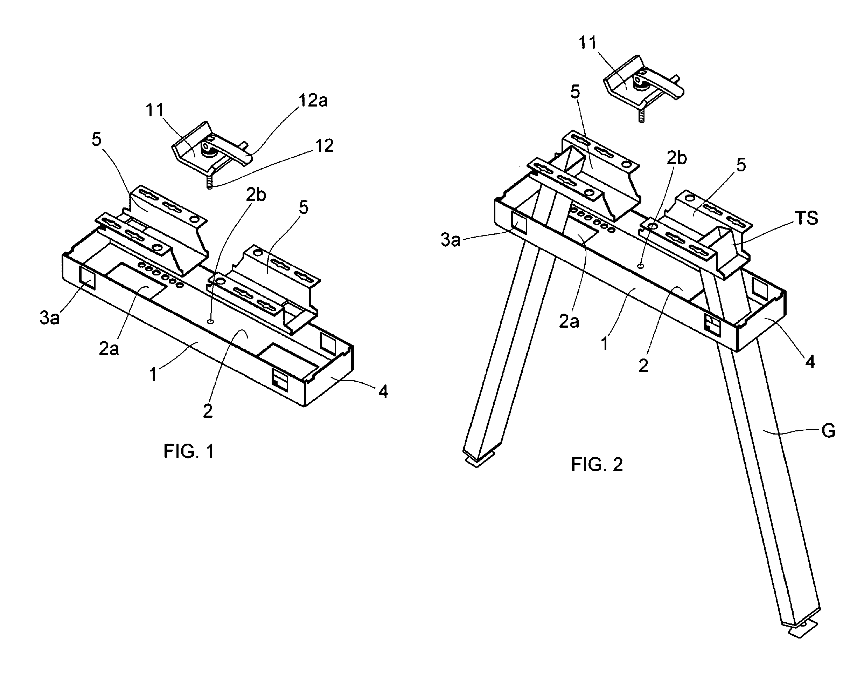

As shown in the sequence of Figs. 2 to 4, the assembly of a metal bearing structure for desks with four legs can be carried out as described below.

First of all, the upper ends (TS) of the legs (G) are inserted and firmly fixed inside the opening (6a) of the slides (5).

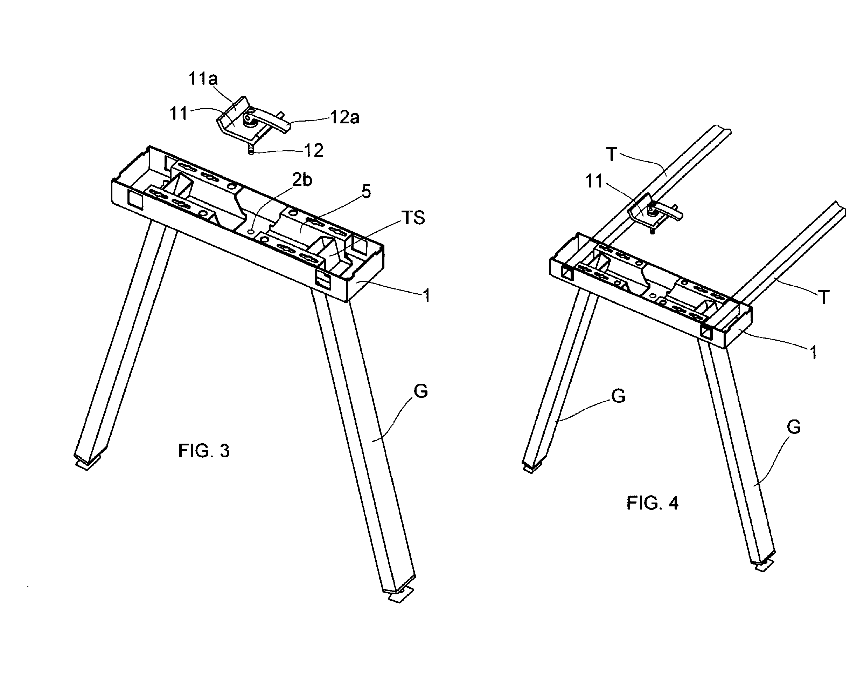

Then, as shown in fig. 2, the legs (G) are inserted into the openings (2a) of the bracket (1) from up downwards until the slides (5) are exactly housed inside the bracket (1), as shown in Fig. 3.

Now, the beams (T) are inserted into the slots (3a) of the bracket (1), as shown in Fig. 4. Attention is drawn on the fact that in such a circumstance the section of the beams (T) inserted into the bracket (1) rests on the sloping step (10) of the divaricable slides (5).

Now it is simply necessary to place the divaricator cursor (11) between the inclined profiles (8) of the slides (5) and tighten the bolt (12) in order to cause the progressive forced insertion of the cursor between the slides (5) that are forced to slide outwards, with consequent mutual engagement of legs (G) and beams (T) into the bracket (1).

During the divarication of the slides (5) the sloping steps (10) penetrate under the beams (T), and the legs (G) are slightly divaricated, because of loose coupling between legs (G) and openings (2a) of the bracket (1).

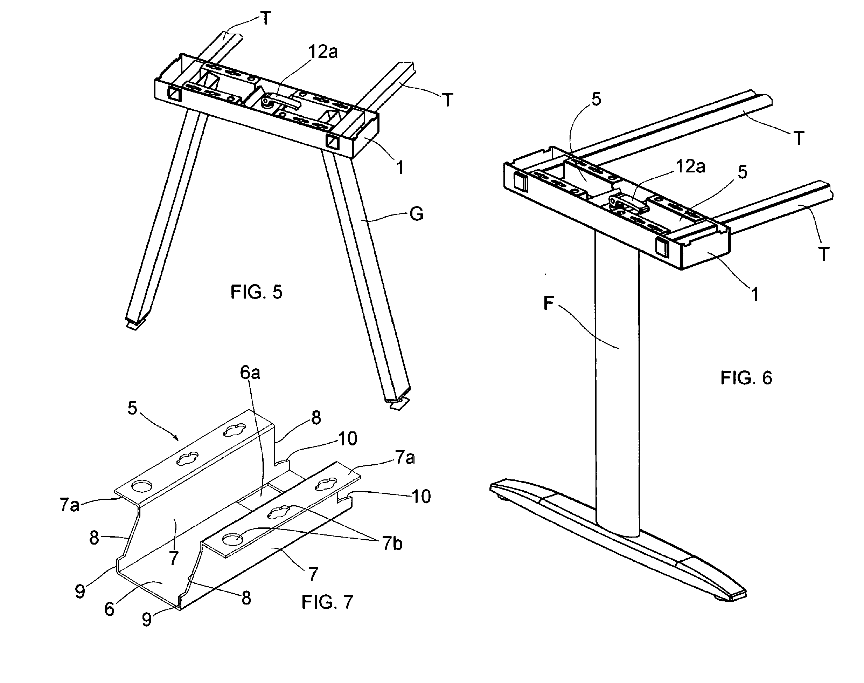

As shown in Fig. 6, in case of bearing structures with two T-shaped legs, the bolt (12) is directly tightened on a threaded hole provided in the center of the upper end of the stem (F) of each leg.

Finally, it must be noted that said assembly sequence is not binding; for example, it is possible to insert the beams (T) in the under-top bracket (1) first and then the legs (G) inside the under-top bracket (1).

## Claims

1. A connection device of beams (T) and legs (G) of metal bearing structures of office desk tops and similar, **characterized in that** it comprises:
- an under-top bracket (1) with box-shaped structure, the longitudinal sides (3) of which are provided with two slots (3a) to insert the end sections of the beams (T) of said bearing structure;
- a specular divaricable pair of slides (5) horizontally and longitudinally sliding inside the longitudinal sides (3) of said under-top bracket (1);
- a divaricator cursor (11) adapted to be situated and penetrate between said pair of divaricable slides (5);
- a tightening bolt (12) to push said divaricator cursor (11) forward and stabilize it in the position reached at the end of the forward travel.

2. A device as claimed in the preceding claim, **characterized in that** each slide (5) has a U-shaped cross-section, so that each slide (5) comprises a rectangular bottom (6) and two longitudinal sides (7), the end sections of which have an inclined profile (8).

3. A device as claimed in the preceding claim, **characterized in that** said longitudinal sides (7) have top borders joined with corresponding external shelves (7a) provided with holes and slots (7b).

4. A device as claimed in one or more of the preceding claims, **characterized in that** the end sections of said longitudinal sides (7) have an inclined profile (8) and steps (9 and 10), of which one (10) with sloping profile.

5. A device as claimed in one or more of the preceding claims, **characterized in that** said divaricator cursor (11) consists in a metal plate provided with an opposite pair of raised sloping edges (11 a), adapted to be positioned between the specular pair of slides (5) and interfere with the inclined profile (8) of said slides (5).

6. A device as claimed in the preceding claims, **characterized in that** said bolt (12) is provided with a screwing handle (12a) and adapted to be coupled with a hole (2b) provided in the center of the bottom (2) of the bracket (1).

7. A device as claimed in one or more of the preceding claims, **characterized in that** the bottom (2) of the bracket (1) is provided with an opposite pair of openings (2a) adapted to receive, with loose coupling, the upper ends (TS) of the legs (G).

8. A device as claimed in the preceding claim, **characterized in that** said bottom (6) of the slides (5) is provided with an opening (6a) adapted to exactly house the upper ends (TS) of the legs (G).

9. A device as claimed in the preceding claim, **characterized in that** said opening (6a) exactly houses the upper ends (TS) of the legs (G) that are welded inside said opening.
